# EUROPÄISCHE PATENTSCHRIFT

(11) **EP 3 164 280 B1**
(45) Veröffentlichungstag und Bekanntmachung des Hinweises auf die Patenterteilung: **07.11.2018**
(21) Anmeldenummer: 15738910.7
(22) Anmeldetag: 17.07.2015
(51) Int. Cl.: B60H 1/34, F24F 13/14, F24F 13/15

(54) **BELÜFTUNGSVORRICHTUNG**
VENTILATION DEVICE
DISPOSITIF DE VENTILATION

(30) Priorität: 07.08.2014 DE 202014103672 U
(43) Veröffentlichungstag der Anmeldung: 10.05.2017
(73) Patentinhaber: GRAMMER Interior Components GmbH, 74736 Hardheim (DE)
(72) Erfinder: ROTH, Thomas, 91233 Neunkirchen am Sand (DE); STEHLE, Pierre, 61191 Rosbach (DE); LINK, Gunter, 74722 Hainstadt (DE)
(74) Vertreter: Ostriga Sonnet Wirths & Vorwerk
(86) Internationale Anmeldenummer: PCT/EP2015/066421
(87) Internationale Veröffentlichungsnummer: WO 2016/020171

(56) Entgegenhaltungen:
- GB-A- 885 918
- GB-A- 2 196 421
- US-A- 2 892 395
- US-A- 2 959 117
- US-A- 6 159 092

## Beschreibung

Die Erfindung betrifft eine Belüftungsvorrichtung zur Ansteuerung einer Ausströmrichtung eines Luftstromes mit den Merkmalen des Oberbegriffs des Anspruchs 1.

Aus der DE 20 12 000 A1 ist eine Belüftungsvorrichtung bekannt, welche insbesondere für ein Instrumententafelbauteil eines Kraftfahrzeuges zur Belüftung eines Innenraumes vorgesehen ist. Diese Belüftungsvorrichtung weist ein äußeres Gehäuse auf, in welchem eine Regelklappe zur Volumenänderung vorgesehen ist. Am Austrittsende des äußeren Gehäuses ist zur Ansteuerung der Strömungsrichtung des ausströmenden Luftstromes ein inneres Gehäuse vorgesehen, welches mehrere, im Abstand zueinander angeordnete Horizontallamellen fest angeordnet in dem inneren Gehäuse aufnimmt. Dieses innere Gehäuse ist um eine horizontale Schwenkachse schwenkbar im äußeren Gehäuse gelagert. Das innere Gehäuse nimmt mehrere im Abstand zueinander angeordnete Vertikallamellen auf, die senkrecht zu den feststehenden Horizontallamellen ausgerichtet sind. Diese Vertikallamellen weisen Schlitze auf, so dass in diese Schlitze die Horizontallamellen einsteckbar sind und die Horizontal- und Vertikallamellen in einer gemeinsamen Ebene in Ausströmrichtung liegen. Die Vertikallamellen sind schwenkbar um eine vertikale Schwenkachse ansteuerbar.

Diese Anordnung weist den Nachteil auf, dass zur Änderung der Strömungsrichtung abweichend zur Horizontalen das innere Gehäuse schwenkbar angesteuert werden muss, wobei dieses innere Gehäuse beispielsweise oben abschnittsweise gegenüber einer stirnseitigen Blende der Belüftungsvorrichtung hervortritt und unten zurücktritt, wodurch der optische Eindruck beeinträchtigt ist. Zudem ist nicht möglich, dass die Horizontallamellen unabhängig von den Vertikallamellen ansteuerbar sind. Aus der DE 20 2010 000 445 U1 ist eine Belüftungsvorrichtung mit einem multifunktionalen Bedienknopf bekannt, durch welchen die Horizontallamelle, die Vertikallamelle und die Schließklappe verstellbar sind. Dabei sind die Horizontallamellen durch ein Gehäuse ausgebildet, welches auf- und abschwenkbar ist und dahinterliegend im Inneren des Gehäuses der Belüftungsvorrichtung sind die Vertikallamellen separat angeordnet.

Des Weiteren ist aus der DE 102 26 441 B3 und der DE 100 57 421 A1 eine Belüftungsvorrichtung bekannt, bei denen die Horizontal- und Vertikallamellen durch ein einziges Bedienelement ansteuerbar ist, wobei im inneren des Gehäuses die Vertikallamellen angeordnet und getrennt hierzu zur Sichtseite der Belüftungseinrichtung weisend und getrennt von den Vertikallamellen die Horizontallamellen angeordnet sind. Diese Belüftungsvorrichtungen ermöglichen zwar die unabhängige Ansteuerung der Vertikallamellen und der Horizontallamellen aufgrund der räumlich getrennten hintereinander geschalteten Anordnung, jedoch ist dadurch zur Sichtseite hin keine homogene Optik eines Ausströmfeldes der Belüftungsvorrichtung möglich.

US 2,959,117 B offenbart eine Belüftungsvorrichtung, bei welcher Horizontallamellen und Vertikallamellen ineinander geschachtelt angeordnet sind und sowohl die Horizontallamellen, als auch die Vertikallamellen jeweils über eine Gelenkstange untereinander bewegungsgekoppelt sind. Ein zentral im durch die Lamellen aufgespannten Feld angeordnetes Bedienelement greift sowohl an der zentralen Vertikallamelle als auch an der zentralen Horizontallamelle an. Eine Verstellung der jeweiligen zentralen Lamelle hat eine Verstellung der jeweils bewegungsgekoppelten Lamellen zur Folge.

Eine in etwas vergleichbare Belüftungsvorrichtung zeigen GB 2 196 421 A und GB 885,918 A. Ähnlich ist auch der Aufbau der US 6,159,092 B, wobei hier ein Sichtelement vor den Lamellen angeordnet ist.

US 2,892,395 B zeigt eine Vorrichtung für die gelenkige Verbindung von Horizontallamellen und Vertikallamellen.

Der Erfindung liegt deshalb die Aufgabe zugrunde, eine Belüftungsvorrichtung vorzuschlagen, welche eine flexible Einstellung in der Ausströmrichtung des Luftstroms ermöglicht und eine homogene ansprechende Optik des Ausströmfeldes aufweist.

Diese Aufgabe wird durch eine Belüftungsvorrichtung gelöst, bei welcher die Belüftungsvorrichtung ein Koppelgetriebe aufweist, das Koppelgetriebe eine horizontal gerichtete Schubstange betätigt, die an jeder Vertikallamelle angreift, das Koppelgetriebe mit einer Gelenkanordnung in Verbindung steht, die Gelenkanordnung ihrerseits gelenkig an den Horizontallamellen angreift, um diese an deren horizontaler Schwenkachse schwenkbar anzusteuern, das Bedienelement einen unmittelbaren Angriff an den Lamellen vermeidend mit dem Koppelgetriebe in Verbindung steht, das Bedienelement in den Rahmen integriert ist oder außerhalb des Rahmens angeordnet ist.

Dadurch wird ermöglicht, dass jede Horizontallamelle und jede Vertikallamelle im Gehäuse schwenkbar gelagert wird und durch das kreuzweise Ineinanderschachteln der Horizontallamellen und Vertikallamellen eine homogene Optik des Ausströmfeldes gegeben ist und auch bei Einstellung von verschiedenen Ausströmrichtungen erhalten bleibt.

Eine bevorzugte Ausführungsform der Erfindung sieht vor, dass die Vertikallamellen und die Horizontallamellen in deren Kreuzungspunkten frei zueinander angeordnet sind, so dass deren Einstellung in der gewünschten Ausrichtung leicht einstellbar ist. Alternativ können die Kreuzungspunkte auch eine Lagerstelle bilden, durch welche die Vertikallamelle um die vertikale Schwenkachse und die Horizontallamelle um die horizontale Schwenkachse schwenkbar ist. Diese können auch flexibel gestaltet werden, um zum Beispiel Toleranzen auszugleichen. Dies weist den Vorteil auf, dass durch die kreuzweise Anordnung und Ineinanderschachtelung der Horizontal- und Vertikallamelle sich gegenseitig in den Kreuzungspunkten durch die Lagerstelle abstützt, so dass eine stabile und gleichbleibende Gitterstruktur aufrechterhalten ist. Gleichzeitig kann dadurch in einfacher Weise die gegenseitige Auslenkung zueinander gesichert werden.

Vorteilhafterweise ist der Kreuzungspunkt durch eine nutenförmige Vertiefung in der Horizontal- oder Vertikallamelle gebildet, in welche ein Lagerzapfen der Horizontal- oder Vertikallamelle aufgenommen ist. Diese Ausgestaltung weist den Vorteil auf, dass der Kreuzungspunkt, insbesondere wenn dieser eine Lagerstelle bildet, von der Sichtseite der Belüftungsvorrichtung nahezu nicht wahrgenommen wird und optisch in den Hintergrund rückt, wodurch die homogene Optik des Ausströmfeldes verstärkt werden kann. Vorteilhafterweise kann eine Lagerstelle ohne zusätzliche Lagerelemente gebildet werden.

Eine weitere bevorzugte Ausgestaltung der Belüftungsvorrichtung sieht vor, dass die Horizontal- oder Vertikallamelle eine V-förmige Aussparung ausweist, welche sich entgegen der Ausströmrichtung ausgehend von einem Kreuzungspunkt der Horizontal- und Vertikallamelle erstreckt. Diese V-förmige Aussparung ermöglicht, ausgehend von dem Kreuzungspunkt der Horizontal- und Vertikallamelle, jeweils eine Schwenkbeweglichkeit, so dass die Horizontallamelle um die horizontale Schwenkachse und die Vertikallamelle um die vertikale Schwenkachse zur Ansteuerung der Ausströmrichtung verschwenkbar ist.

Bevorzugt weist die Horizontal- oder Vertikallamelle entlang deren Schwenkachse und entgegen der Ausströmrichtung weisend dreieckige oder wimpelförmige Leitflächen auf. Diese dreieckförmigen oder wimpelförmigen Leitflächen resultieren aus den V-förmigen Aussparungen und ermöglichen, dass durch die V-förmig gebildete Aussparung der Schwenkbereich der Horizontallamelle bestimmt wird. Alternativ können die Leitflächen auch im Anschluss an eine dreieckförmige oder wimpelförmige Leitfläche eine sich vergrößernde Leitfläche umfassen, welche entgegen der Ausströmrichtung sich erstreckt. Anders ausgedrückt, kann die Vertikallamelle nur bereichsweise eine Reduzierung der Breite der Leitfläche aufweisen, um einen Schwenkbereich für die Horizontallamelle zu bilden.

Die Horizontal- und/oder Vertikallamelle weisen entlang der Schwenkachse aneinandergereihte dreiecksförmige Leitflächen auf, welche durch Achsabschnitte miteinander verbunden sind. Bevorzugt ist die Horizontal- oder Vertikallamelle einteilig aus Kunststoff als Kunststoffspritzgussteil ausgebildet, so dass sowohl die Leitflächen als auch die Lagerzapfen miteinander integriert sein können.

Die Horizontal- oder Vertikallamelle weist bevorzugt entlang der Längsachse und an die Kreuzungspunkte angrenzend eine durchgehend ausgebildete Leitfläche auf, die sich entgegen der Ausströmrichtung erstreckt. Bevorzugt ist die längere Lamelle von den beiden Lamellen mit der durchgehend ausgebildeten Leitfläche ausgebildet.

Die Schwenkachse der Horizontallamelle und die Schwenkachse der Vertikallamelle kreuzen sich vorzugsweise in den Kreuzungspunkten. Dadurch wird das Übereinanderlegen der Horizontal- und Vertikallamelle im Aufbau vereinfacht.

Des Weiteren ist bevorzugt vorgesehen, dass die Schwenkachse der Horizontal- und Vertikallamellen in einer gemeinsamen Ebene liegen. Diese Anordnung ermöglicht ein flachbauendes Gehäuse, d.h. dass ausgehend von einer Abdeckplatte oder -blende an der Sichtseite der Belüftungseinrichtung nur ein geringer Bauraum erforderlich ist, der in den Belüftungskanal der Lüftungsanlage hineinragt.

Des Weiteren kann vorgesehen sein, dass die Reguliervorrichtung zumindest einen elektrischen Stellantrieb aufweist, durch welchen oder welche die Verstellung der Horizontallamellen und/oder der Vertikallamellen ansteuerbar sind.

Eine alternative Ausgestaltung der Belüftungsvorrichtung sieht vor, dass ein oder mehrere Vertikallamellen und/oder ein oder mehrere Horizontallamellen gegenläufig zueinander in der Ausströmrichtung ansteuerbar sind. Dadurch kann beispielsweise jede zweite Lamelle gegenläufig zur benachbarten Lamelle angesteuert werden oder jede dritte oder vierte usw., wodurch eine diffuse Ausströmung des Luftstromes erzielt werden kann.

Zur Ansteuerung der gegenläufig ausgerichteten Vertikal- und/oder Horizontallamellen zur Bildung einer diffusen Ausströmung können eine oder mehrere Schubstangen und eine oder mehrere Gelenkanordnungen vorgesehen sein, um die Einstellung vorzunehmen. Dabei kann die Gelenkvorrichtung manuell betätigbar sein oder durch zumindest einen elektrischen Antrieb angesteuert werden. Ebenso ist auch ein Koppelgetriebe zum gemeinsamen Ansteuern möglich.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht von vorne auf die erfindungsgemäße Belüftungseinrichtung,
Figur 2 eine perspektivische Ansicht von hinten auf die Belüftungseinrichtung gemäß Figur 1,
Figur 3 eine perspektivische Ansicht einer Horizontallamelle,
Figur 4 eine perspektivische Ansicht einer Vertikallamelle,
Figur 5 eine perspektivische Ansicht von mehreren übereinanderliegende Horizontal- und Vertikallamellen,
Figur 6 eine schematische Seitenansicht der Anordnung gemäß Figur 5,
Figur 7 eine schematische Ansicht von vorne auf die Belüftungsvorrichtung gemäß Figur 1.

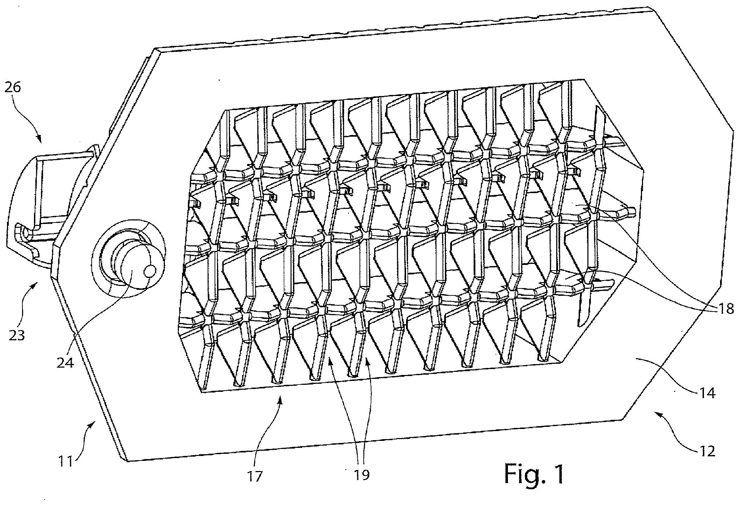

In Figur 1 ist perspektivisch eine Belüftungsvorrichtung 11 dargestellt, welche beispielsweise am Ende eines Lüftungskanals für ein Belüftungsbeziehungsweise Heizsystem an einem Instrumententafelbauteil eines Kraftfahrzeuges befestigbar ist. Eine solche Belüftungsvorrichtung 11 kann auch für weitere Belüftungs- oder Heizsysteme eingesetzt werden.

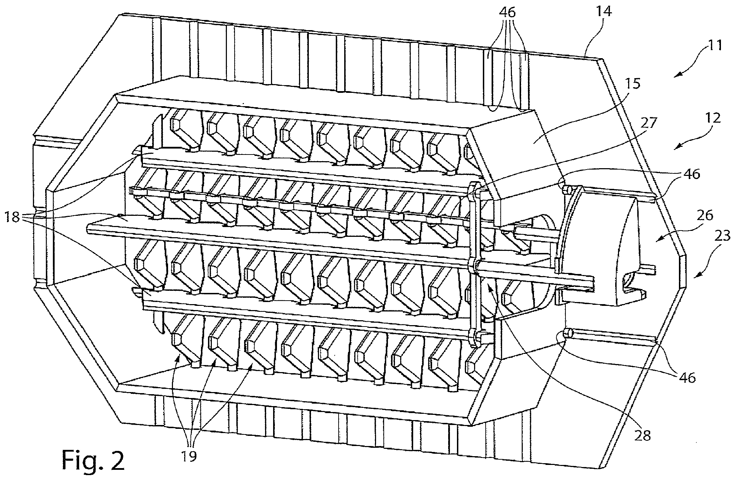

Die Belüftungsvorrichtung 11 umfasst ein Gehäuse 12, welches zur Sichtseite weisend zumindest einen stirnseitigen Rahmen 14 und dahinterliegend einen kasten- oder rohrförmigen Gehäuseabschnitt 15 umfasst, wie aus Figur 2 hervorgeht. Der Rahmen 14 ist bevorzugt auf dem Gehäuseabschnitt 15 montierbar.

Dieser rohr- oder kastenförmige Gehäuseabschnitt 15 ist in einem nicht näher dargestellten Lüftungskanal der Belüftungs- oder Heizsystems einsetzbar. Die Belüftungseinrichtung 11 wird mit einem Luftstrom in Richtung auf die Rückseite der Belüftungseinrichtung 11 gemäß Figur 2 beaufschlagt, wodurch eine Ausströmrichtung aus einer Vorderseite der Belüftungsvorrichtung 11 gemäß Figur 1 heraus gegeben ist.

Im Ausführungsbeispiel ist der stirnseitige Rahmen 14 gleichzeitig als eine Blende, bzw. ein optisches Gestaltungselement ausgebildet, welche mannigfaltig sein kann.

In einem durch den rohrförmigen Gehäuseabschnitt 15 gebildeten Ausströmerfeld 17 sind eine Vielzahl von Horizontallamellen 18 und Vertikallamellen 19 angeordnet. Die Horizontallamellen 18 und Vertikallamellen 19 sind jeweils bevorzugt parallel zueinander ausgerichtet. Die Horizontallamellen und Vertikallamellen 18, 19 liegen übereinander beziehungsweise sind ineinander geschachtelt. Dadurch entstehen zwischen den Horizontallamellen 18 und den Vertikallamellen 19 Kreuzungspunkte 21. Bevorzugt liegen dieses Kreuzungspunkte 21 in einer Ebene.

Zur Ansteuerung der Horizontallamellen 18 und Vertikallamellen 19 ist eine Reguliereinrichtung 23 vorgesehen, welche ein einziges Bedienelement 24 aufweist, das auf der Sichtseite der Belüftungseinrichtung angeordnet ist. Dieses einzige Bedienelement 24 steht mit einem Koppelgetriebe 26 in Verbindung, welches eine Schubstange 27 betätigt. Die Schubstange 27 ist horizontal ausgerichtet und greift an jeder Vertikallamelle 19 an. Des Weiteren steht das Koppelgetriebe 26 mit einer Gelenkanordnung 28 in Verbindung, welche gelenkig an den Horizontallamellen 18 angreift, um diese an deren horizontale Schwenkachse 32 schwenkbar anzusteuern.

Das Bedienelement 24 ist beispielsweise in den stirnseitigen Rahmen 14 integriert. Dieses kann alternativ auch außerhalb des Rahmens liegen.

Die Reguliereinrichtung 23 ermöglicht, dass die Horizontallamellen 18 und die Vertikallamellen 19 jeweils unabhängig voneinander ansteuerbar sind. Ebenso kann eine gleichzeitige Schwenkbewegung der Horizontallamelle 18 und Vertikallamelle 19 angesteuert werden.

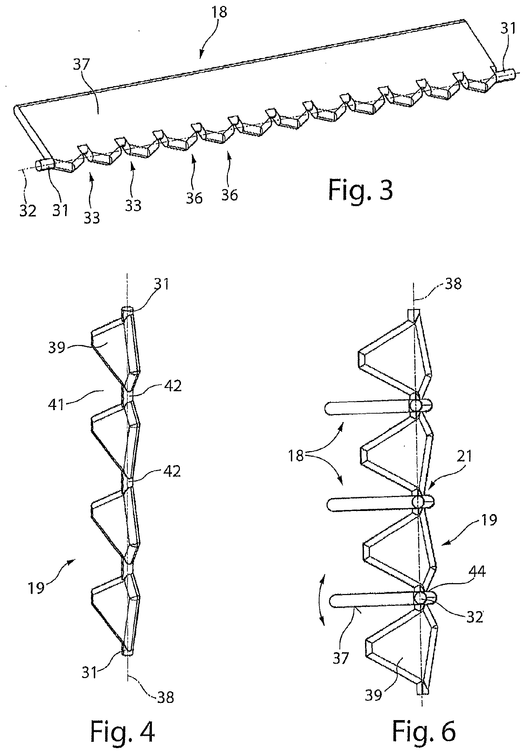

In Figur 3 ist beispielhaft eine perspektivische Ansicht der Horizontallamelle 18 dargestellt. Diese Horizontallamelle 18 weist an deren jeweiligen stirnseitigen Ende einen Lagerzapfen 31 auf, so dass die Horizontallamelle 18 um eine die Lagerzapfen 31 durchquerende Schwenkachse 32 gelagert ist. Die Horizontallamelle 18 weist des Weiteren die Schwenkachse 32 durchbrechende nutenförmige Vertiefungen 33 auf, welche ein Teil einer Lagerstelle 44 mit der Vertikallamelle 19 bilden. Zwischen den nutenförmigen Vertiefungen 33 kann in Ausströmrichtung ein Vorsprung 36 ausgebildet sein. Die Geometrie und Form dieser Vorsprünge 36 kann an die Optik angepasst werden, um eine ansprechende und/oder homogene Optik im Ausströmerfeld 17 zu bilden. An die nutenförmigen Vertiefungen 33 anschließend und entgegengesetzt zur Ausströmrichtung sich erstreckend ist eine Leitfläche 37 ausgebildet, welche vorteilhafterweise sich durchgehend über die Länge der Horizontallamellen 18 erstreckt. Dadurch kann eine Ablenkung der Luftströmung nach oben oder unten erfolgen.

In Figur 4 ist eine perspektivische Ansicht der Vertikallamelle 19 dargestellt. Diese Vertikallamelle 19 weist am jeweiligen stirnseitigen Ende ebenfalls einen Lagerzapfen 31 auf. Dadurch ist die Vertikallamelle 19 um eine Schwenkachse 38 im Gehäuse 12 schwenkbar angeordnet. Die Vertikallamelle 19 weist winkelförmige oder dreieckförmige Leitflächen 39 auf, wodurch sich zwischen den aneinander gereihten wimpelförmigen Leitflächen 39 V-förmige Aussparungen 41 ergeben. Diese Aussparungen 41 bilden einen Freiraum für die Schwenkbeweglichkeit der Horizontallamelle 18, wie aus Figur 6 ersichtlich ist. Zwischen den wimpelförmigen Leitflächen 39 sind Achsabschnitte 42 ausgebildet. Eine Stirnseite der wimpelförmigen Leitflächen 39 in Ausströmrichtung weisend kann bezüglich der jeweiligen Geometrie und Form an gewünschte Optik des Ausströmerfeldes 17 angepasst werden.

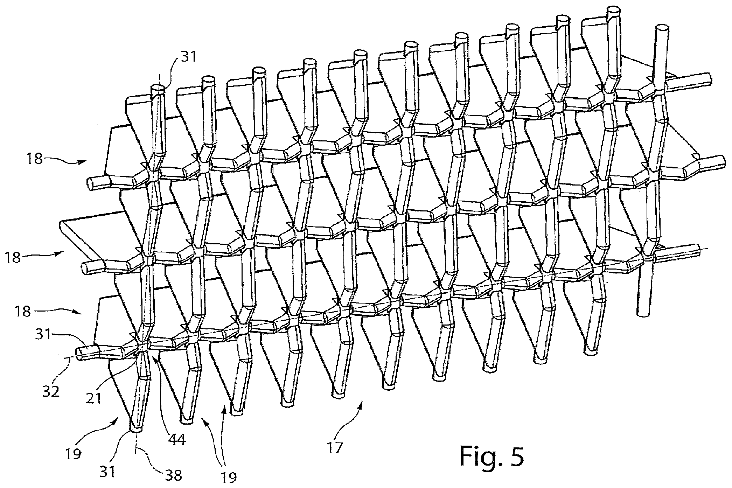

In Figur 5 ist eine schematische Ansicht dargestellt, bei welcher die Horizontallamellen 18 und Vertikallamellen 19 ineinander gesetzt sind. Dabei nehmen die nutenförmigen Vertiefungen 33 der Horizontallamelle 18 die Achsabschnitte 42 der Vertikallamelle 19 auf und bilden im Kreuzungspunkt 21 eine Lagerstelle 44, durch welche die Horizontallamelle 18 und Vertikallamelle 19 einander zugeordnet und fixiert sind, wobei gleichzeitig deren jeweiligen Schwenkbarkeit der Horizontallamelle 18 um die Schwenkachse 32 und der Vertikallamelle 19 um die Schwenkachse 38 erhalten bleibt. Die Schwenkachsen 32 der Horizontallamellen 18 und die Schwenkachsen 38 der Vertikallamellen 19 schneiden sich, wobei diese Kreuzungspunkte 21 bevorzugt alle in einer gemeinsamen Ebene liegen. Durch diese Ineinanderschachtelung der Horizontallamelle 18 und Vertikallamelle 19 wird gemäß Figur 5 offensichtlich, dass die Vertikallamelle 19 um die Schwenkachse 38 schwenkbar ist, unabhängig von der Ausrichtung der Horizontallamelle 18.

Figur 6 stellt eine Seitenansicht zu Figur 5 dar. Darin wird verdeutlicht, dass durch die V-förmige Aussparung 41, beziehungsweise durch die wimpelförmige Ausgestaltung der Leitfläche 39 der Vertikallamelle 19 die Schwenkbeweglichkeit der Horizontallamelle 18 ermöglicht ist. Die im Kreuzungspunkt 21 gebildete Lagerstelle 44 ermöglicht also sowohl eine Schwenkbewegung der Vertikallamelle 19 um deren Schwenkachse 38 als auch eine Schwenkbewegung der Horizontallamelle 19 um deren Schwenkachse 32.

Der stirnseitige Rahmen 14 und der rohrförmige Gehäuseabschnitt 15 können jeweils an deren aufeinander zuweisenden Stirnfläche Lageraufnahmen 46 aufweisen, so dass nach dem Positionieren der Horizontallamellen 18 auf dem Gehäuseabschnitt 15 und dem darauffolgenden Anordnen der Vertikallamellen 19 durch eine Fixierung des Rahmens 14 zum Gehäuseabschnitt 15 ein einfacher Zusammenbau gegeben ist.

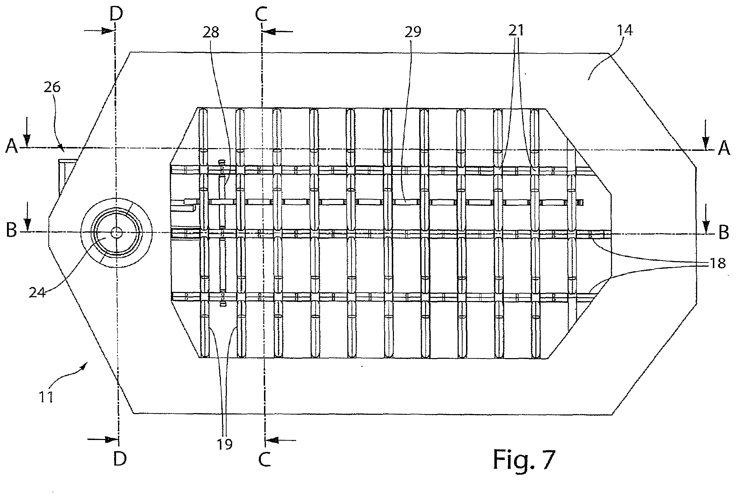

In Figur 7 ist eine schematische Ansicht von vorne auf die Belüftungsvorrichtung 11 gemäß Figur 1 dargestellt. Dadurch wird die homogene Optik der Horizontallamellen 18 und Vertikallamellen 19 deutlich.

## Patentansprüche

1. Belüftungsvorrichtung (11) mit einem Gehäuse (12), welches Horizontallamellen (18) und Vertikallamellen (19) aufweist, die kreuzweise ineinandergeschachtelt angeordnet sind, und welches zu einer Sichtseite weisend einen stirnseitigen Rahmen (14) umfasst, und mit einer Reguliervorrichtung (23), durch welche zumindest eine Ausströmrichtung ansteuerbar ist, wobei die Reguliereinrichtung (23) ein einziges Bedienelement (24) zur Verstellung der Horizontallamellen (18) und Vertikallamellen (19) aufweist, wobei das Bedienelement (24) auf der Sichtseite der Belüftungsvorrichtung (11) angeordnet ist, wobei die Horizontallamellen (18) und die Vertikallamellen (19) jeweils um deren Schwenkachse (32, 38) schwenkbar im Gehäuse (12) gelagert sind, **dadurch gekennzeichnet, dass**
- die Belüftungsvorrichtung (11) ein Koppelgetriebe (26) aufweist,
- das Koppelgetriebe (26) eine horizontal gerichtete Schubstange (27) betätigt, die an jeder Vertikallamelle (19) angreift,
- das Koppelgetriebe (26) mit einer Gelenkanordnung (28) in Verbindung steht,
- die Gelenkanordnung (28) ihrerseits gelenkig an den Horizontallamellen angreift, um diese an deren horizontaler Schwenkachse (32) schwenkbar anzusteuern,
- das Bedienelement (24) einen unmittelbaren Angriff an den Lamellen (18, 19) vermeidend mit dem Koppelgetriebe (26) in Verbindung steht,
- das Bedienelement (24) in den Rahmen (14) integriert ist oder außerhalb des Rahmens angeordnet ist.

2. Belüftungsvorrichtung nach Anspruch 1, **dadurch gekennzeichnet, dass** die Horizontallamelle (18) und die Vertikallamelle (19) durch die kreuzweise Ineinanderschachtelung einen Kreuzungspunkt (21) aufweisen, in dem diese frei zueinander angeordnet sind oder in welchem eine Lagerstelle (44) gebildet ist, durch welche die Vertikallamelle (19) um die vertikale Schwenkachse (38) und die Horizontallamelle (18) um die horizontale Schwenkachse (32) schwenkbar ist.

3. Belüftungsvorrichtung nach Anspruch 2, **dadurch gekennzeichnet, dass** der Kreuzungspunkt (21) durch eine nutenförmige Vertiefung (33) in der Horizontallamelle (18) oder Vertikallamelle (19) gebildet ist, in welchem ein Achsabschnitt (42) der Vertikallamelle (19) oder Horizontallamelle (18) aufgenommen ist.

4. Belüftungsvorrichtung nach einem der vorherigen Ansprüche, **dadurch gekennzeichnet, dass** die Vertikallamelle (19) oder Horizontallamelle (18) eine V-förmige Aussparung (41) aufweist, welche sich ausgehend von einem Kreuzungspunkt (21) entgegen der Ausströmrichtung erstreckt und vorzugsweise entgegen der Ausströmrichtung sich aufweitet.

5. Belüftungsvorrichtung nach einem der vorherigen Ansprüche, **dadurch gekennzeichnet, dass** die Horizontallamelle (18) oder Vertikallamelle (19) entlang der Schwenkachse (32, 38) und entgegen der Ausströmrichtung weisend eine dreiecksförmige oder wimpelförmige Leitfläche (39) oder einen sich daran anschließenden und entgegen der Ausströmrichtung sich erstreckenden und vorzugsweise sich vergrößernden Leitflächenabschnitt aufweist, der sich aufweitet.

6. Belüftungsvorrichtung nach Anspruch 5, **dadurch gekennzeichnet, dass** die Horizontallamelle (18) oder Vertikallamelle (19) entlang der Schwenkachse (32, 38) aneinandergereihte Leitflächen (39) aufweist, welche durch Achsabschnitte (42) miteinander verbunden sind.

7. Belüftungsvorrichtung nach einem der vorhergehenden Ansprüche, **dadurch gekennzeichnet, dass** die Vertikallamelle (19) oder Horizontallamelle (18) entlang der Schwenkachse (32, 38) und an die Kreuzungspunkte (21) angrenzend eine durchgehend ausgebildete Leitfläche (37) aufweist, die sich entgegen der Ausströmrichtung erstreckt.

8. Belüftungsvorrichtung nach einem der vorhergehenden Ansprüche, **dadurch gekennzeichnet, dass** die Schwenkachse (32) der Horizontallamelle (18) oder die Schwenkachse (38) der Vertikallamelle (19) sich kreuzen und Kreuzungspunkte (21) bilden.

9. Belüftungsvorrichtung nach einem der vorhergehenden Ansprüche, **dadurch gekennzeichnet, dass** die Schwenkachse (32) der Horizontallamelle (18) und die Schwenkachse (38) der Vertikallamelle (19) in einer gemeinsamen Ebene liegen.

10. Belüftungsvorrichtung nach einem der Ansprüche 1 bis 9, **dadurch gekennzeichnet, dass** die Reguliervorrichtung (23) zumindest einen elektrischen Antrieb aufweist, welcher die Schubstange (27) und die Gelenkanordnung (28) einzeln oder gemeinsam ansteuert.

11. Belüftungsvorrichtung nach einem der Ansprüche 1 bis 9, **dadurch gekennzeichnet, dass** ein oder mehrere Horizontallamellen (18) und/oder ein oder mehrere Vertikallamellen (19) gegenläufig zueinander in der Ausströmrichtung ansteuerbar sind.

## Claims

1. Ventilation device (11) comprising a housing (12) having horizontal louvres (18) and vertical louvres (19) which are disposed crosswise in a mutually nested arrangement and comprising frame (14) at the front side directed towards a visible side, and having a regulating device (23) by means of which at least one outflow direction can be controlled, the regulating device (23) having a single control element (24) for adjusting the horizontal louvres (18) and vertical louvres (19), and the control element (24) is disposed on the visible side of the ventilation device (11), and the horizontal louvres (18) and the vertical louvres (19) are mounted in the housing (12) so as to be pivotable respectively about their pivot axis (32, 38),
**characterised in that**
- the ventilation device (11) has a coupling mechanism (26),
- the coupling mechanism (26) actuates a horizontally oriented push rod (27) which acts on each vertical louvre (19),
- the coupling mechanism (26) is connected to a link arrangement (28),
- the link arrangement (28) in turn acts on the horizontal louvres in an articulating arrangement in order to control the latter enabling a pivoting movement about their horizontal pivot axis (32),
- the control element (24) is connected to the coupling mechanism (26) without directly acting on the louvres (18, 19),
- the control element (24) is integrated in the frame (14) or is disposed outside the frame.

2. Ventilation device as claimed in claim 1, **characterised in that** the horizontal louvre (18) and the vertical louvre (19) have an intersection point (21) due to the crosswise mutually nested arrangement in which they are disposed freely with respect to one another or in which a bearing point (44) is formed, by means of which the vertical louvre (19) is pivotable about the vertical pivot axis (38) and the horizontal louvre (18) is pivotable about the horizontal pivot axis (32).

3. Ventilation device as claimed in claim 2, **characterised in that** the intersection point (21) is formed by a groove-shaped recess (33) in the horizontal louvre (18) or vertical louvre (19) in which a shaft section (42) of the vertical louvre (19) or horizontal louvre (18) is received.

4. Ventilation device as claimed in one of the preceding claims, **characterised in that** the vertical louvre (19) or horizontal louvre (18) has a V-shaped cut-out (41) which extends from an intersection point (21) opposite the outflow direction and preferably becomes wider opposite the outflow direction.

5. Ventilation device as claimed in one of the preceding claims, **characterised in that** along the pivot axis (32, 38) and pointing opposite the outflow direction, the horizontal louvre (18) or vertical louvre (19) has a triangular or pennant-shaped guide surface (39) or, adjoining it and extending opposite the outflow direction and preferably becoming larger, a guide surface section which becomes wider.

6. Ventilation device as claimed in claim 5, **characterised in that** the horizontal louvre (18) or vertical louvre (19) has guide surfaces (39) aligned with one another along the pivot axis (32, 38) which are connected to one another by shaft sections (42).

7. Ventilation device as claimed in one of the preceding claims, **characterised in that** the vertical louvre (19) or horizontal louvre (18) has a continuously extending guide surface (37) along the pivot axis (32, 38) and adjoining the intersection points (21) which extends opposite the outflow direction.

8. Ventilation device as claimed in one of the preceding claims, **characterised in that** the pivot axis (32) of the horizontal louvre (18) or the pivot axis (38) of the vertical louvre (19) intersect and form intersection points (21).

9. Ventilation device as claimed in one of the preceding claims, **characterised in that** the pivot axis (32) of the horizontal louvre (18) and the pivot axis (38) of the vertical louvre (19) lie in a common plane.

10. Ventilation device as claimed in one of claims 1 to 9, **characterised in that** the regulating device (23) has at least one electric drive which controls the push rod (27) and the link arrangement (28) individually or jointly.

11. Ventilation device as claimed in one of claims 1 to 9, **characterised in that** one or more horizontal louvres (18) and/or one or more vertical louvres (19) can be controlled in opposite directions from one another in the outflow direction.

## Revendications

1. Dispositif de ventilation (11) muni d'un boîtier (12) qui comprend des lamelles horizontales (18) et des lamelles verticales (19) lesquelles sont disposées de façon entrecroisée les unes dans les autres, et qui comporte un cadre (14) frontal orienté vers une partie visible, et avec un dispositif de régulation (23) qui permet de commander au moins un sens d'écoulement de sortie, le dispositif de régulation (23) comportant un seul élément de commande (24) pour le réglage des lamelles horizontales (18) et des lamelles verticales (19), l'élément de commande (24) étant disposé sur le côté visible du dispositif de ventilation (11), les lamelles horizontales (18) et les lamelles verticales (19) étant montées dans le boîtier (12) de façon à pouvoir pivoter respectivement autour de leur axe de pivotement (32, 38), **caractérisé en ce que** :
- le dispositif de ventilation (11) comprend un mécanisme d'accouplement (26),
- le mécanisme d'accouplement (26) actionne une tige de poussée (27) alignée horizontalement qui est en prise au niveau de chaque lamelle verticale (19),
- le mécanisme d'accouplement (26) est en liaison avec un système d'articulation (28),
- le système d'articulation (28) est en prise, de son côté, de manière articulée, au niveau des lamelles horizontales, pour commander, de façon pivotante, celles-ci, au niveau de leur axe de pivotement (32) horizontal,
- l'élément de commande (24) est en liaison avec le mécanisme d'accouplement (26) évitant une prise directe au niveau des lamelles (18, 19),
- l'élément de commande (24) est intégré dans le cadre (14) ou est disposé à l'extérieur du cadre.

2. Dispositif de ventilation selon la revendication 1, **caractérisé en ce que** la lamelle horizontale (18) et la lamelle verticale (19) comportent de par leur disposition de façon entrecroisée les unes dans les autres, un point de croisement (21), dans lequel celles-ci sont disposées librement les unes par rapport aux autres, ou dans lequel est formé un point de logement (44) à travers lequel la lamelle verticale (19) peut pivoter autour de l'axe de pivotement (38) vertical et la lamelle horizontale (18), autour de l'axe de pivotement (32) horizontal.

3. Dispositif de ventilation selon la revendication 2, **caractérisé en ce que** le point de croisement (21) est formé par un renfoncement (33) en forme de rainure dans la lamelle horizontale (18) ou lamelle verticale (19), dans lequel est logée une section d'axe (42) de la lamelle verticale (19) ou de la lamelle horizontale (18).

4. Dispositif de ventilation selon l'une des précédentes revendications, **caractérisé en ce que** la lamelle verticale (19) ou lamelle horizontale (18) comporte un creux (41) en forme de V lequel s'étend depuis un point de croisement (21) en direction opposée au sens d'écoulement de sortie et s'élargit de préférence en direction opposée du sens d'écoulement de sortie.

5. Dispositif de ventilation selon l'une des précédentes revendications, **caractérisé en ce que** la lamelle horizontale (18) ou lamelle verticale (19) comporte le long de l'axe de pivotement (32, 38) et montrant dans la direction opposée au sens d'écoulement de sortie, une face de guidage (39) en forme de bannière ou de triangle ou une section de face de guidage s'étendant et de préférence s'agrandissant dans la direction opposée au sens d'écoulement de sortie et s'y rattachant, qui s'élargit.

6. Dispositif de ventilation selon la revendication 5, **caractérisé en ce que** la lamelle horizontale (18) ou lamelle verticale (19) comporte le long de l'axe de pivotement (32, 38) des faces de guidage (39) placées attenantes les unes aux autres qui sont reliées ensemble par des sections d'axe (42).

7. Dispositif de ventilation selon l'une des précédentes revendications, **caractérisé en ce que** la lamelle verticale (19) ou lamelle horizontale (18) comporte le long de l'axe de pivotement (32, 38) et au niveau des points de croisement (21), de façon contigüe, une face de guidage (37) réalisée en continu qui s'étend en direction opposée au sens d'écoulement de sortie.

8. Dispositif de ventilation selon l'une des précédentes revendications, **caractérisé en ce que** l'axe de pivotement (32) de la lamelle horizontale (18) ou l'axe de pivotement (38) de la lamelle verticale (19) se croise et forme des points de croisement (21).

9. Dispositif de ventilation selon l'une des précédentes revendications, **caractérisé en ce que** l'axe de pivotement (32) de la lamelle horizontale (18) et l'axe de pivotement (38) de la lamelle verticale (19) sont situés dans un plan commun.

10. Dispositif de ventilation selon l'une des revendications 1 à 9, **caractérisé en ce que** le dispositif de régulation (23) comporte au moins un entrainement électrique lequel commande individuellement ou ensemble la tige de poussée (27) et le système d'articulation (28).

11. Dispositif de ventilation selon l'une des revendications 1 à 9, **caractérisé en ce qu'**une ou plusieurs lamelles horizontales (18) et/ou une ou plusieurs lamelles verticales (19) peut/peuvent être commandée(s) en sens contraire l'une de l'autre/les unes des autres dans le sens d'écoulement de sortie.
